# FASCICULE DE BREVET EUROPEEN

(11) **EP 3 908 557 B1**
(45) Date de publication et mention de la délivrance du brevet: **13.03.2024**
(21) Numéro de dépôt: 20705411.5
(22) Date de dépôt: 08.01.2020
(51) Int. Cl.: C03C 3/091, C03C 13/06

(54) **FIBRES MINERALES**
MINERALFASERN
MINERAL FIBRES

(30) Priorité: 08.01.2019 FR 1900147
(43) Date de publication de la demande: 17.11.2021
(73) Titulaire: SAINT-GOBAIN ISOVER, 92400 Courbevoie (FR)
(72) Inventeur: CLAIREAUX, Corinne, 75019 PARIS (FR)
(74) Mandataire: Saint-Gobain Recherche
(86) Numéro de dépôt international: PCT/FR2020/050024
(87) Numéro de publication internationale: WO 2020/144434

(56) Documents cités:
- WO-A1-95/31410
- WO-A1-97/49643
- CN-A- 1 544 371
- US-A- 5 554 324

## Description

La présente invention concerne le domaine des fibres minérales artificielles. Elle vise plus particulièrement les fibres minérales destinées à fabriquer des matériaux d'isolation thermique. Elle s'intéresse notamment aux fibres minérales vitreuses pour des applications de protection contre le feu.

La résistance au feu d'un élément de construction correspond à la durée pendant laquelle l'élément conserve sa fonction portante, garantit l'étanchéité aux flammes et conserve son rôle d'isolant thermique. Le test incendie standard consiste généralement en une montée en température suivant la norme ISO 834, basée sur la courbe des températures d'un feu cellulosique. Or, cette courbe n'est pas représentative des incendies mettant en jeu des hydrocarbures. Pour simuler les incendies liés à des produits pétroliers comme ceux pouvant se dérouler sur des plates-formes off-shore, dans l'industrie pétrochimique ou dans des tunnels routiers, c'est la courbe hydrocarbure décrite dans la norme EN 1363-1 qui est appliquée. Elle diffère de la courbe cellulosique par une augmentation de température beaucoup plus brutale, et une température finale plus élevée. Le document WO 97/49643 A1 décrit des compositions de fibres de verre.

L'objectif la présente invention consiste donc à proposer une composition de fibres minérales vitreuses basée sur le système quaternaire SiO₂-CaO-MgO-B₂O₃, avec une tenue au feu améliorée.

Cette composition doit également pouvoir être fibrée par les procédés traditionnellement utilisés, tel que les procédés Sillan ou de fibrage sur rotors. Le déroulement du fibrage par ces procédés est optimal lorsque la matière fondue a une viscosité de 1,5 poises. D'autre part, la température de fibrage idéale, à laquelle cette viscosité doit être atteinte (T_{fib}≈T_{log1,5}), est entre 1320 et 1420°C. La température n'étant pas parfaitement constante dans le temps ni parfaitement homogène lors du fibrage, un écart suffisant est nécessaire entre la température de fibrage (T_{fib}) et la température du liquidus (T_{liq}) pour éviter tout problème de dévitrification lors du fibrage. Cet écart, appelé plage de fibrage, doit être d'au moins 30°C.

Par ailleurs, le caractère biosoluble est, comme pour toutes fibres minérales artificielles, un critère important pour les fibres minérales selon l'invention. Les fibres minérales doivent pouvoir se dissoudre rapidement dans un milieu physiologique afin de prévenir tout risque pathogène potentiel lié à l'accumulation éventuelle des fibres les plus fines dans l'organisme par inhalation. A cet effet, la composition selon l'invention doit notamment satisfaire un Karcinogenicity Index (KI), défini dans la règle technique TRGS 905, supérieur ou égal à 40.

Ainsi, la présente invention concerne des fibres minérales telles que définies dans la revendication indépendante 1.

Dans l'intégralité du présent texte, les teneurs sont exprimées en pourcentages pondéraux, sauf indication contraire.

De telles compostions permettent de satisfaire à la fois les critères de biosolubilité, de résistance au feu améliorée (notamment au feu d'hydrocarbures) et de processabilité (T_{fib}≈T_{log1,5} entre 1320 et 1420°C et T_{fib}-T_{liq} supérieure à 30°C) recherchés. Ces propriétés ont notamment pu être obtenues grâce à une optimisation des ratios entre les différents oxydes.

Les fibres minérales selon l'invention sont des fibres vitreuses, c'est-à-dire qu'elles présentent une phase vitreuse majoritaire (au moins 50%), en général à plus de 90% voire à plus de 99% en poids, ou même à 100%, contrairement aux fibres céramiques qui sont cristallisées. La proportion de phases vitreuse et cristalline dans les fibres minérales peut être déterminée par diffractométrie de rayons X (DRX).

Les compositions de fibres minérales selon l'invention sont basées sur le système quaternaire SiO₂-CaO-MgO-B₂O₃, c'est-à-dire que la somme des teneurs en SiO₂, CaO, MgO et B₂O₃ représente au moins 92 %, notamment au moins 95 %, de la composition. De préférence, la somme des teneurs en SiO₂, CaO, MgO, B₂O₃ et R₂O représente au moins 95 %, notamment au moins 97 %, voire au moins 98 % de la composition de fibres minérales.

La teneur en silice (SiO₂) est comprise dans un domaine allant de 55 % notamment de 56 %, voire 56,6 %, à 60 %, notamment à 59,5 %, voire 59 %. Une teneur supérieure à 60 % peut diminuer la biosolubilité des fibres minérales. Une teneur inférieure à 55 % peut affecter défavorablement la viscosité de la composition aux températures de fibrage.

La teneur en chaux (CaO) est comprise dans un domaine allant de 25 %, notamment de 25,5 %, à 29,0 %, notamment à 28,5 %, voire 28 %. Des teneurs inférieures à 25 % peuvent augmenter la température du liquidus.

La magnésie (MgO) contribue à la résistance au feu des fibres minérales. La teneur en MgO est comprise dans un domaine allant de 1 % (ou 1,0 %), notamment de 2 %, voire 3 %, à 10 % (ou 10,0 %), voire 9,5 % ou 9,0 %.

Le rapport molaire CaO/(CaO+MgO) est de 0,70 à 0,75. En dehors de cette plage la résistance au feu peut s'avérer insuffisante.

L'oxyde de bore (B₂O₃) contribue à la résistance au feu des fibres minérales. La teneur en B₂O₃ est de 1 % (ou 1,0%), notamment de 1,5 %, voire 2 %, à 6 %, notamment 5,5 %, voire 5 %. Au-dessus de 6 % la viscosité aux températures de fibrage peut être diminuée.

Le rapport molaire CaO/(CaO+B₂O₃) est de préférence de 0,75 à 0,95, notamment de 0,78 à 0,91, afin d'abaisser la température du liquidus et d'élargir encore la plage de fibrage.

La teneur totale en oxydes alcalins (R₂O), notamment soude (Na₂O) et potasse (K₂O), est dans un domaine allant jusqu'à 2,5 %, notamment jusqu'à 2,0 %. La teneur en Na₂O est avantageusement de 0,1 %, notamment de 0,5 %, ou 0,6 %, à 2,0 %. La teneur en K₂O est quant à elle avantageusement d'au plus 1,0, voire 0,5 %, ou même 0,1 %. La laine minérale ne comprend de préférence pas d'autre oxyde alcalin que Na₂O et K₂O. Elle peut néanmoins contenir de faibles quantités de Li₂O, parfois présent en tant qu'impuretés dans certaines matières premières.

Le rapport molaire R₂O/B₂O₃ est de 0,20 à 0,60, notamment de 0,23 à 0,54. Sans vouloir être lié à une quelconque théorie, il est supposé que, dans le domaine de compositions selon l'invention, le bore agit principalement comme formateur de réseau lorsque le rapport molaire R₂O/B₂O₃ est de 0,20 à 0,60. Cela a pour effet d'augmenter la viscosité aux températures de fibrage des compositions selon l'invention tout en conservant une teneur en oxyde de bore significative qui améliore la résistance au feu.

La teneur en alumine (Al₂O₃) est inférieure ou égale à 2,5 %, notamment de 0,1 %, voire 0,4 % ou 0,5 %, à 2,4 %, voire 2,3 %. Des teneurs supérieures à 2,5 % peuvent affecter la biosolubilité des fibres.

Le rapport molaire (B₂O₃-R₂O)/(CaO+Al₂O₃) supérieur à 0,050, de préférence supérieur à 0,055. Ce ratio permet d'assurer une bonne résistance au feu, notamment en cas de présence non négligeable d'alumine dans la composition.

La composition de fibres minérales selon l'invention peut également contenir du P₂O₅, notamment à des teneurs pouvant aller jusqu'à 3 %, voire jusqu'à 1,2 %, pour augmenter la biosolubilité à pH neutre.

La composition selon l'invention peut également comprendre d'autres éléments présents notamment en tant qu'impuretés inévitables. Elle peut comprendre de l'oxyde de titane (TiO₂) à des teneurs comprises dans un domaine allant jusqu'à 3 %, notamment de 0,1 à 2,0 %, voire 1,0%. De même, l'oxyde de fer (exprimé sous la forme Fe₂O₃) peut être présent à des teneurs comprises dans un domaine allant jusqu'à 3 %, notamment de 0,1 à 2,0 %, voire 1,0%.

Il va de soi que les différentes plages préférées décrites ci-avant peuvent être combinées librement les unes avec les autres, les différentes combinaisons ne pouvant toutes êtres énumérées par soucis de concision.

Quelques combinaisons préférées sont décrites ci-après.

Selon un mode de réalisation préféré, les fibres minérales selon l'invention présentent une composition chimique comprenant les constituants suivants, en pourcentages pondéraux :

| | | | |
|---|---|---|---|
| SiO₂ | 56 à 59,5 %, | notamment | 56,6 à 59 %, |
| CaO | 25 à 28,5 %, | notamment | 25,5 à 28 %, |
| MgO | 2 à 9,5 %, | notamment | 3 à 9 % |
| B₂O₃ | 1,5 à 5,5 %, | notamment | 2 à 5 % |
| R₂O | jusqu'à 2,0 % | | |
| Al₂O₃ | 0,1 à 2,5 %, | notamment | 0,5 à 2,5 % |

un rapport molaire CaO/(CaO+MgO) de 0,70 à 0,75,
un rapport molaire (B₂O₃-R₂O)/(CaO+Al2O3) supérieur à 0,050.

L'invention a également pour objet un procédé d'obtention de fibres minérales selon l'invention, comprenant une étape de fusion d'un mélange vitrifiable possédant sensiblement la même composition chimique que celle desdites fibres minérales ; puis une étape de fibrage, notamment par un procédé Sillan ou de fibrage sur rotors.

L'étape de fusion permet d'obtenir un bain de matière fondue à partir d'un mélange vitrifiable. Le mélange vitrifiable comprend diverses matières premières naturelles et/ou artificielles, par exemple du sable de silice, de la phonolithe, de la dolomie, du carbonate de sodium etc...

L'étape de fusion peut être réalisée de différentes manières connues, notamment par fusion dans un four à flammes ou par fusion électrique.

Le four à flammes comprend au moins un brûleur, aérien (les flammes sont disposées au-dessus du bain de matière fondue et le chauffent par rayonnement) ou immergé (les flammes sont créées directement au sein du bain de matière fondue). Le ou chaque brûleur peut être alimenté par divers combustibles tels que le gaz naturel ou le fioul.

Par « fusion électrique », on entend que le mélange vitrifiable est fondu par effet Joule, au moyen d'électrodes immergées dans le bain de matière fondue, à l'exclusion de toute utilisation d'autres moyens de chauffage, tels que des flammes. Le mélange vitrifiable est normalement réparti de manière homogène sur la surface du bain de matière fondue à l'aide d'un dispositif mécanique, et constitue ainsi un écran thermique limitant la température au-dessus du bain de matière fondue, si bien que la présence d'une superstructure n'est pas toujours nécessaire. Les électrodes peuvent être suspendues de manière à plonger dans le bain de matière fondue par le dessus, être installées dans la sole, ou encore être installées dans les parois latérales de la cuve. Les deux premières options sont généralement préférées pour les cuves de grandes dimensions afin de répartir au mieux le chauffage du bain de matière fondue. Les électrodes sont de préférence en molybdène, voire éventuellement en oxyde d'étain. Le passage de l'électrode en molybdène à travers la sole se fait de préférence par l'intermédiaire d'un porte-électrode en acier refroidi à l'eau.

L'étape de fusion peut également mettre en oeuvre à la fois une fusion flammes et une fusion électrique, par exemple en employant un four à flammes également muni d'électrodes en parois latérales servant à accélérer la fusion du mélange vitrifiable.

L'étape de fibrage est de préférence réalisée par les procédés Sillan ou de fibrage sur rotors. Le procédé Sillan, appelé « blast drawing method » en anglais et décrit par exemple dans CA 1281188, consiste à amener la matière fondue à travers une ou plusieurs buses pour former un filament primaire. Les filaments primaires sont ensuite atténués à l'aide d'un flux de gaz à haute vitesse pour obtenir les fibres minérales.

Le procédé de fibrage sur rotors, aussi appelé fibrage en cascade et décrit par exemple dans WO 92/06047, consiste à verser la matière fondue sur un ensemble de rotors montés en rotation autour d'axes différents sensiblement horizontaux. Les rotors sont agencés de telle sorte que, lorsqu'ils sont en rotation, la matière fondue versée sur la périphérie du rotor supérieur de l'ensemble de rotors est projetée sur la périphérie du rotor suivant, puis successivement sur la périphérie de chaque rotor suivant. Les fibres minérales sont projetées par force centrifuge depuis le ou chaque rotor et collectées.

Les fibres obtenues peuvent être liées entre elles à l'aide d'une composition d'encollage pulvérisée à leur surface, avant d'être réceptionnées et mises en forme pour donner divers produits de laine minérales, comme des rouleaux ou des panneaux. Les produits de laine minérale ainsi liés comprennent de préférence au plus 10% en poids sec de liant par rapport au total du poids du liant et des fibres minérales.

Afin d'obtenir une résistance thermique encore meilleure, la laine minérale comprend avantageusement un composé du phosphore, de préférence pulvérisé en même temps que la composition d'encollage. Le composé du phosphore peut être minéral, tel que décrit dans la demande WO 01/68546 ou en partie organique, par exemple un oligomère ou polymère du type polyacide ou polyester phosphonique ou phosphorique, comme enseigné par la demande WO 2006/103375.

L'invention a également pour objet un produit d'isolation thermique comprenant des fibres minérales selon l'invention. Un tel produit se présente notamment sous la forme de rouleaux ou de panneaux. Il peut également se présenter sous formes de fibres non liées en vrac. Il peut être employé par exemple dans des bâtiments, dans l'industrie ou dans des moyens de transport, notamment ferroviaire ou maritime. Il est particulièrement adapté à des applications dans lesquelles il peut être amené à subir des températures élevées, soit en continu (isolation de fours ou étuves domestiques ou industriels, de conduites de transport de fluides) soit de manière accidentelle, dans un rôle de protection contre le feu (portes anti-feu, isolation de navires, de tunnels ou de plateformes off-shore...). Plus généralement, le produit selon l'invention peut être employé pour isoler thermiquement tout type de bâtiments, tertiaires ou d'habitation (collective ou individuelle). Il peut par exemple être utilisé dans des systèmes d'isolation par l'extérieur, pour l'isolation de maisons à ossature bois, dans des panneaux sandwichs, dans des conduits de ventilation etc...

Les exemples qui suivent illustrent l'invention de manière non-limitative.

Des exemples de verres (exemple 1 selon l'invention et exemples comparatifs 2 à 6) dont les compositions pondérales sont présentées dans le tableau 1 ont été élaborés. Dans ce tableau, les constituants sont exprimés en pourcentages pondéraux, et les rapports CaO/(CaO+MgO) et (B₂O₃-R₂O)/(CaO+Al₂O₃) en moles.

La plage de fibrage correspond à la différence entre la température de fibrage, à laquelle la composition doit présenter une viscosité d'environ 1,5 poises, et la température de liquidus (T_{fib}-T_{liq}≈ T_{log1,5}-T_{liq}).

L'affaissement est déterminé par analyse thermomécanique. Les verres obtenus sont réduits en poudre verre dont la granulométrie est inférieure à 40 µm. Chaque poudre de verre est compactée sous la forme de pastilles cylindriques de 5 mm de diamètre et d'une hauteur d'environ 1 cm et de densité égale à 64% de celle du verre. L'affaissement, exprimé en pourcentage, correspond à la variation de la hauteur d'une pastille de poudre de verre soumise à une rampe de 10 K/min de la température ambiante jusqu'à 1100°C par rapport à la hauteur initiale de la pastille. La mesure de hauteur de l'échantillon se fait à l'aide d'un palpeur posé au sommet du cylindre. Les tests de répétabilités permettent de définir une déviation standard inférieure à 1%. Il est considéré que les fibres présenteront une résistance au feu satisfaisante selon norme EN 1363-1 lorsque l'affaissement est inférieur à 10%.

**[Table 1]**

| Verre | 1 | 2 | 3 | 4 | 5 | 6 |
|---|---|---|---|---|---|---|
| SiO₂ | 58,4 | 60,0 | 57,6 | 57,7 | 58,0 | 58,7 |
| CaO | 25,8 | 24,7 | 27,2 | 24,6 | 30,5 | 28,3 |
| MgO | 7,7 | 7,3 | 7,6 | 9,3 | 5,0 | 8,9 |
| B₂O₃ | 4,1 | 4,9 | 3,6 | 4,5 | 4,5 | 3,0 |
| Al₂O₃ | 2,1 | 2,1 | 2,1 | 2,1 | 1,0 | - |
| Na₂O | 1,8 | 0,9 | 1,8 | 1,8 | 1,0 | 0,9 |
| CaO /(CaO+MgO) | 0,71 | 0,71 | 0,72 | 0,65 | 0,81 | 0,69 |
| (B₂O₃-R₂O) /(CaO+Al₂O₃) | 0,061 | 0,120 | 0,044 | 0,077 | 0,087 | 0,056 |
| T_{log1.5} (°C) | 1335 | 1365 | n.m. | 1330 | n.m. | 1310 |
| Plage de fibrage (°C) | >90 | -15 | n.m. | >30 | n.m. | -10 |
| Affaissement (%) | <10 | <10 | 22 | 14 | 13 | 13 |

| | | | | | | |
|---|---|---|---|---|---|---|
| n.m. : non mesuré | | | | | | |

La composition de l'exemple 1 selon l'invention présente à la fois un faible affaissement, indiquant une bonne résistance au feu, ainsi qu'une température T_{log1,5} entre 1320 et 1420°C et une plage de fibrage supérieure à 30°C, ce qui permet un fibrage dans cette gamme de température sans risque de dévitrification. Au contraire, les compositions des exemples comparatifs 2 à 6 ne permettent pas de satisfaire à l'ensemble de ces critères : les exemples 2 et 6 présentent une plage de fibrage négative (T_{fib}<T_{liq}) ; les exemples 3 à 6 ne satisfont pas au critère de résistance au feu.

## Revendications

1. Fibres minérales présentant une composition chimique comprenant les constituants suivants, en pourcentages pondéraux :
| | |
|---|---|
| SiO₂ | 55 à 60 %, |
| CaO | 25 à 29,0 %, |
| MgO | 1 à 10 %, |
| B₂O₃ | 1 à 6 %, |
| R₂O (teneur totale en oxydes alcalins) | jusqu'à 2,5 % |
| Al₂O₃ | 0 à 2,5 %, |
un rapport molaire CaO/(CaO+MgO) de 0,70 à 0,75,
un rapport molaire R₂O/B₂O₃ est de 0,20 à 0,60,
et un rapport molaire (B₂O₃-R₂O)/(CaO+Al₂O₃) supérieur à 0,050.

2. Fibres minérales selon la revendication 1, **caractérisées en ce que** le rapport molaire R₂O/B₂O₃ est de 0,23 à 0,54.

3. Fibres minérales selon l'une quelconque des revendications 1 ou 2, **caractérisées en ce que** le rapport molaire CaO/(CaO+B2O3) est de 0,75 à 0,95, de préférence de 0,78 à 0,91.

4. Fibres minérales selon l'une quelconque des revendications 1 à 3, **caractérisées en ce que** la somme des teneurs en SiO₂ + CaO + MgO + B₂O₃ + R₂O représente au moins 95 %, de préférence au moins 97 %, plus préférentiellement au moins 98 % en poids de la composition chimique desdites fibres minérales.

5. Fibres minérales selon l'une quelconque des revendications 1 à 4, **caractérisées en ce que** lesdites fibres minérales comprennent une teneur en SiO₂ de 55 à 59,5 %, de préférence de 55 à 59 %

6. Fibres minérales selon l'une quelconque des revendications 1 à 4, **caractérisées en ce que** lesdites fibres minérales comprennent une teneur en SiO₂ de 56 à 59,5 %, de préférence de 56,6 à 59 %

7. Fibres minérales selon l'une quelconque des revendications 1 à 6, **caractérisées en ce que** lesdites fibres minérales comprennent une teneur en CaO de 25 à 28,5 %, de préférence 25,5 à 28,5 %, plus préférentiellement de 25,5 à 28 %.

8. Fibres minérales selon l'une quelconque des revendications 1 à 7, **caractérisées en ce que** lesdites fibres minérales comprennent une teneur en MgO de 2 à 9,5 %, de préférence de 3 à 9,0 %.

9. Fibres minérales selon l'une quelconque des revendications 1 à 8, **caractérisées en ce que** lesdites fibres minérales comprennent une teneur en Al₂O3 de 0,1 à 2,5 %, de préférence de 0,5 à 2,5 %, plus préférentiellement de 1 à 2,5 %.

10. Fibres minérales selon l'une quelconque des revendications 1 à 9, **caractérisées en ce que** lesdites fibres minérales ne comprennent que des oxydes alcalins choisis parmi Na₂O, K₂O et Li₂O, de préférence parmi Na₂O et K₂O.

11. Fibres minérales selon l'une quelconque des revendications 1 à 10, **caractérisées en ce que** lesdites fibres minérales comprennent une teneur en Na₂O de 0,1 à 2,0 %, de préférence de 0,6 % à 2,0 %.

12. Fibres minérales selon l'une quelconque des revendications 1 à 11, **caractérisées en ce que** lesdites fibres minérales comprennent une teneur en K₂O d'au plus 1,0 %, de préférence d'au plus 0,5 %.

13. Procédé de fabrication de fibres minérales telles que définies à l'une des revendications 1 à 12, comprenant une étape de fusion d'un mélange vitrifiable adapté à la composition chimique desdites fibres minérales ; puis une étape de fibrage.

14. Produit d'isolation thermique comprenant des fibres minérales telles que définies aux revendications 1 à 12.

## Patentansprüche

1. Mineralfasern, die eine chemische Zusammensetzung vorweisen, umfassend die folgenden Bestandteile in Gewichtsprozent:
| | |
|---|---|
| SiO₂ | zu 55 bis 60 %, |
| CaO | zu 25 bis 29,0 %, |
| MgO | zu 1 bis 10 %, |
| B₂O₃ | zu 1 bis 6 %, |
| R₂O (Gesamtgehalt an Alkalioxiden) | bis zu 2,5 % |
| Al₂O₃ | zu 0 bis 2,5 %, |
ein Molverhältnis CaO/(CaO+MgO) von 0,70 bis 0,75,
ein Molverhältnis R₂O/B₂O₃ von 0,20 bis 0,60,
und ein Molverhältnis (B₂O₃-R₂O)/(CaO+Al₂O₃) über 0,050.

2. Mineralfasern nach Anspruch 1, **dadurch gekennzeichnet, dass** das Molverhältnis R₂O/B₂O₃ 0,23 bis 0,54 beträgt.

3. Mineralfasern nach einem der Ansprüche 1 oder 2,
**dadurch gekennzeichnet, dass** das Molverhältnis CaO/(CaO+B2O3) von 0,75 bis 0,95, vorzugsweise von 0,78 bis 0,91 beträgt.

4. Mineralfasern nach einem der Ansprüche 1 bis 3,
**dadurch gekennzeichnet, dass** die Summe der Gehalte an SiO₂ + CaO + MgO + B₂O₃ + R₂O mindestens zu 95 Gew.-%, vorzugsweise mindestens zu 97 Gew.-%, mehr bevorzugt mindestens zu 98 Gew.-% die chemische Zusammensetzung der Mineralfasern darstellt.

5. Mineralfasern nach einem der Ansprüche 1 bis 4,
**dadurch gekennzeichnet, dass** die Mineralfasern einen Gehalt an SiO₂ von 55 bis 59,5 %, vorzugsweise von 55 bis 59 % umfassen.

6. Mineralfasern nach einem der Ansprüche 1 bis 4,
**dadurch gekennzeichnet, dass** die Mineralfasern einen Gehalt an SiO₂ von 56 bis 59,5 %, vorzugsweise von 56,6 bis 59 % umfassen.

7. Mineralfasern nach einem der Ansprüche 1 bis 6,
**dadurch gekennzeichnet, dass** die Mineralfasern einen Gehalt an CaO von 25 bis 28,5 %, vorzugsweise von 25,5 bis 28,5 %, mehr bevorzugt von 25,5 bis 28 % umfassen.

8. Mineralfasern nach einem der Ansprüche 1 bis 7,
**dadurch gekennzeichnet, dass** die Mineralfasern einen Gehalt an MgO von 2 bis 9,5 %, vorzugsweise von 3 bis 9,0 % umfassen.

9. Mineralfasern nach einem der Ansprüche 1 bis 8,
**dadurch gekennzeichnet, dass** die Mineralfasern einen Gehalt an Al₂O₃ von 0,1 bis 2,5 %, vorzugsweise von 0,5 bis 2,5 %, mehr bevorzugt von 1 bis 2,5 % umfassen.

10. Mineralfasern nach einem der Ansprüche 1 bis 9,
**dadurch gekennzeichnet, dass** die Mineralfasern keine Alkalioxide umfassen, die aus Na₂O, K₂O, Li₂O, vorzugsweise aus Na₂O und K₂O ausgewählt sind.

11. Mineralfasern nach einem der Ansprüche 1 bis 10,
**dadurch gekennzeichnet, dass** die Mineralfasern einen Gehalt an Na₂O von 0,1 bis 2,0 %, vorzugsweise von 0,6 % bis 2,0 % umfassen.

12. Mineralfasern nach einem der Ansprüche 1 bis 11,
**dadurch gekennzeichnet, dass** die Mineralfasern einen Gehalt an K₂O von höchstens 1,0 %, vorzugsweise höchstens 0,5 %, umfassen.

13. Verfahren zum Herstellen von Mineralfasern wie in einem der Ansprüche 1 bis 12 definiert, umfassend einen Schmelzschritt einer verglasbaren Mischung, die an die chemische Zusammensetzung der Mineralfasern angepasst ist; anschließend einen Zerfaserungsschritt.

14. Wärmedämmungsprodukt, umfassend Mineralfasern wie in den Ansprüchen 1 bis 12 definiert.

## Claims

1. Mineral fibers exhibiting a chemical composition comprising the following constituents, as percentages by weight:
| | |
|---|---|
| SiO₂ | 55 to 60%, |
| CaO | 25 to 29.0%, |
| MgO | 1 to 10%, |
| B₂O₃ | 1 to 6%, |
| R₂O (total content of alkali metal oxides) | up to 2.5%, |
| Al₂O₃ | 0 to 2.5%, |
a CaO/(CaO+MgO) molar ratio of 0.70 to 0.75,
a R₂O/B₂O₃ molar ratio is from 0.20 to 0.60
and a (B₂O₃-R₂O)/(CaO+Al₂O₃) molar ratio of greater than 0.050.

2. The mineral fibers as claimed in claim 1, **characterized in that** the R₂O/B₂O₃ molar ratio is 0.23 to 0.54.

3. The mineral fibers as claimed in either one of claims 1 and 2, **characterized in that** the CaO/(CaO+B₂O₃) molar ratio is from 0.75 to 0.95, preferably from 0.78 to 0.91.

4. The mineral fibers as claimed in any one of claims 1 to 3, **characterized in that** the sum of the contents of SiO₂ + CaO + MgO + B₂O₃ + R₂O represents at least 95%, preferably at least 97%, more preferably at least 98%, by weight, of the chemical composition of said mineral fibers.

5. The mineral fibers as claimed in any one of claims 1 to 4, **characterized in that** said mineral fibers comprise an SiO₂ content of 55 to 59.5%, preferably of 55 to 59%.

6. The mineral fibers as claimed in any one of claims 1 to 4, **characterized in that** said mineral fibers comprise an SiO₂ content of 56 to 59.5%, preferably of 56.6 to 59%.

7. The mineral fibers as claimed in any one of claims 1 to 6, **characterized in that** said mineral fibers comprise a CaO content of 25 to 28.5%, preferably of 25.5 to 28.5%, more preferably of 25.5 to 28%.

8. The mineral fibers as claimed in any one of claims 1 to 7, **characterized in that** said mineral fibers comprise an MgO content of 2 to 9.5%, preferably of 3 to 9.0%.

9. The mineral fibers as claimed in any one of claims 1 to 8, **characterized in that** said mineral fibers comprise an Al₂O₃ content of 0.1 to 2.5%, preferably of 0.5 to 2.5%, more preferably of 1 to 2.5%.

10. The mineral fibers as claimed in any one of claims 1 to 9, **characterized in that** said mineral fibers do not comprise any alkali metal oxides other than Na₂O and K₂O.

11. The mineral fibers as claimed in any one of claims 1 to 10, **characterized in that** said mineral fibers comprise an Na₂O content of 0.1 to 2.0%, preferably of 0.6 to 2.0%.

12. The mineral fibers as claimed in any one of claims 1 to 11, **characterized in that** said mineral fibers comprise a K₂O content of at most 1.0%, preferably of at most 0.5%.

13. A process for the manufacture of mineral fibers as defined in one of claims 1 to 12, comprising a stage of melting a vitrifiable mixture suited to the chemical composition of said mineral fibers, and then a stage of fiberizing.

14. A thermal insulation product comprising mineral fibers as defined in claims 1 to 12.
